# EUROPÄISCHE PATENTSCHRIFT

(11) **EP 2 746 892 B1**
(45) Veröffentlichungstag und Bekanntmachung des Hinweises auf die Patenterteilung: **16.12.2015**
(21) Anmeldenummer: 12008586.5
(22) Anmeldetag: 21.12.2012
(51) Int. Cl.: G06F 1/12, H04J 3/06

(54) **Automatisierte Anlage und Verfahren zur Synchronisation einer automatisierten Anlage**
Automated system and method for synchronising an automated system
Installation automatisée et procédé de synchronisation d'une installation automatisée

(43) Veröffentlichungstag der Anmeldung: 25.06.2014
(73) Patentinhaber: Baumüller Nürnberg GmbH, 90482 Nürnberg (DE)
(72) Erfinder: Büchner, Stephan, 90542 Eckental (DE)
(74) Vertreter: FDST Patentanwälte

(56) Entgegenhaltungen:
- DE-A1-102008 049 161
- GIANLUCA CENA ET AL: "Evaluation of EtherCAT Distributed Clock Performance", IEEE TRANSACTIONS ON INDUSTRIAL INFORMATICS, IEEE SERVICE CENTER, NEW YORK, NY, US, Bd. 8, Nr. 1, 1. Februar 2012 (2012-02-01) , Seiten 20-29, XP011398084, ISSN: 1551-3203, DOI: 10.1109/TII.2011.2172434

## Beschreibung

Die Erfindung betrifft eine automatisierte Anlage und ein Verfahren zur Synchronisation einer automatisierten Anlage. Unter automatisierte Anlage wird insbesondere eine Fertigungsstraße aber auch jede andere Automatisierungslösung im Bereich des Maschinenbaus verstanden.

Bei automatisierten Anlagen, die mindestens zwei elektrische Bauteile umfassen, wie zum Beispiel Fertigungsstraßen oder auch CNC-Maschinen, ist eine Synchronisation der einzelnen Bauteile von Nöten. So müssen Greifer und bearbeitende Maschinen, wir Bohrer, aufeinander abgestimmt sein, damit die Bearbeitung erst dann stattfindet, wenn der Greifer ein zu bearbeitendes Bauteil in die gewünschte Position verbracht hat. Um eine möglichst hohe Bearbeitungsgeschwindigkeit zu gewährleisten ist hierbei eine Positionsvermessung mittels Sensoren nicht erwünscht. Vielmehr erfolgt eine Bearbeitung anhand von Zeitinformationen die über ein Signalnetzwerk an die Bauteile verschickt werden.

Aus der EP 1 657 619 B1 ist ein Verfahren zur Zeitsynchronisation in einem zyklisch arbeitenden Kommunikationssystem bekannt. Bei diesem wird einmalig eine absolute Zeitinformation an alle Teilnehmer des Kommunikationssystems versandt und diese als Bezugsgröße für die Berechnung jeweils einer lokalen Uhrzeit bei jedem der Kommunikationsteilnehmer herangezogen. Die absolute Zeitinformation liegt beispielsweise in dem Format "2000-04-01, 16:05:30, 123" vor.

Aus der DE 10 2008 049 161 A1 ist ein Multiprozessorsystem bekannt, bei dem mehrere Mikroprozessoren über einen Bus signaltechnisch miteinander verbunden sind. Zur Synchronisation der Mikroprozessoren des Multiprozessorsystems wird ein vorhandenes Taktsignal unterbrochen, die Zeitzähler der einzelnen Mikroprozessoren auf einen bestimmten vorgegebenen Wert gesetzt, und danach das Taktsignal erneut gestartet, wobei bei jedem empfangenen Taktsignal durch die Mikroprozessoren deren jeweiliger Zeitzähler um eins erhöht wird.

Aus Gianluca Cenat et al.: "Evaluation of EtherCat Distributed Clock Performance", IEEE Transactions on Industrial Informatics, IEEE Service Center, New York, Bd. 8 Nr. 1 (2012-02-01) ist es bekannt, dass bei einem EtherCat-System, das in der Automatisierungstechnik angewandt wird, eine erste Synchronisierung bei einem Einschalten der Slaves erfolgt, wobei die internen Zähler zurückgesetzt werden. Eine derartige Synchronisation ist vergleichsweise ungenau.

Der Erfindung liegt die Aufgabe zugrunde, eine besonders geeignete automatisierte Anlage und ein besonders geeignetes Verfahren zur Synchronisation einer automatisierten Anlage anzugeben, das vergleichsweise einfach und unabhängig erfolgt.

Hinsichtlich der automatisierten Anlage wird diese Aufgabe durch die Merkmale des Anspruchs 1 und hinsichtlich des Verfahrens durch die Merkmale des Anspruchs 10 erfindungsgemäß gelöst. Vorteilhafte Weiterbildungen und Ausgestaltungen sind Gegenstand der Unteransprüche.

Die automatisierte Anlage umfasst zwei elektrische Bauteile, die miteinander zusammenwirken. Bei der automatisierten Anlage handelt es sich beispielsweise um eine Fertigungsstraße, eine Druckmaschine oder eine CNC-Fräse. Ferner fallen unter automatisierte Anlage jegliche Automatisierungslösungen im Bereich des Maschinenbaus. Mit anderen Worten wird unter automatisierter Anlage jede planvolle Zusammenstellung von in räumlichem Zusammenhang stehenden Maschinen oder Geräten verstanden, wobei Maschinen oder Geräte als elektrische Bauteile bezeichnet sind. Die automatisierte Anlage kann hierbei auch lediglich einen Teilbereich einer weiteren, größeren Anlage bilden.

Die beiden elektrischen Bauteile wirken zusammen, also insbesondere ist eines der beiden Bauteile von dem jeweils anderen abhängig. Die elektrischen Bauteile sind insbesondere Sensoren und/oder Aktoren, wie z. B. ein Elektromotor, der insbesondere einen Bandförderer oder dergleichen antreibt, oder sonstige Maschinen, wie Greifer. Jedes der Bauteile weist einen eigenen Zeitzähler auf, und die Bauteile sind mittels eines Signainetzwerkes miteinander verbunden. Dies erfolgt z. B. mittels geeigneter Datenübertragungskabel oder per Funk. Über das Signalnetzwerk werden zyklisch Prozessdaten übertragen. Mit anderen Worten erfolgt ein periodischer Austausch von Daten zwischen den einzelnen Bauteilen mittels einer zyklischen Übertragung über das Signalnetzwerk. Das Signalnetzwerk ist bevorzugt Feldbus oder ein sonstiges Bus-System, geeigneterweise EtherCat.

Insbesondere zur Einhaltung eines einem jeden elektrischen Bauteil zugewiesenen Zeitabschnitts, in dem die jeweiligen Prozessdaten über das Signalnetzwerk übertragen werden, sind die elektrischen Bauteile miteinander synchronisiert. Hierfür wird eine gemeinsame Bezugsgröße für die Zeitzähler aller Bauteile herangezogen. Ausgehend von dieser Bezugsgröße wird mittels der Zeitzähler ein lokaler Zeitstempel jedes elektrischen Bauteils bestimmt. Zu diesem Zweck wird jeweils die vergangene Zeit seit der Bezugsgröße bestimmt und als lokaler Zeitstempel verwendet. Die Bezugsgröße selbst ist eine globale Zeitinformation, also eine Zeitinformation, die für die vollständige automatisierte Anlage oder zumindest den Teil der automatisierten Anlage, der synchronisiert ist, gilt.

Ferner ist die Zeitinformation relativ und weist demnach lediglich einen Bezug zur automatisierten Anlage auf. Insbesondere ist die relative Zeitinformation im Wesentlichen unabhängig von Ereignissen, die sich außerhalb der automatisierten Anlage abspielen, abgespielt haben oder keinen Bezug zu der automatisierten Anlage aufweisen. Die globale, relative Zeitinformation ist beispielsweise der Zeitpunkt einer Fertigstellung eines bestimmten Prozesses, z. B. die Fertigung des hundertsten Fertigungsstückes, der Zeitpunkt einer Auswechslung oder Reparatur eines bestimmten Teiles der Anlage oder dergleichen.

Aufgrund der Heranziehung einer globalen, relativen Zeitinformation ist einerseits eine aufwendige Abstimmung der automatisierten Anlage mit weiteren Systemen nicht notwendig, die zudem überprüft und verifiziert werden muss. Auch ist eine derartige Abstimmung nicht fehlerunanfällig. Andererseits steht für sämtliche Bauteile der automatisierten Anlage die globale, relative Zeitinformation zur Verfügung, so dass sämtliche elektrische Bauteile aufeinander abstimmbar sind. Folglich ist es möglich, die Bearbeitungsgeschwindigkeit der automatisierten Anlage zu erhöhen.

Die globale, relative Zeitinformation ist eine Zustandsänderung. Mit anderen Worten wird als Bezugsgröße der Zeitpunkt einer bestimmten Änderung des Zustands der automatisierten Anlage herangezogen. Insbesondere handelt es sich bei der die globale, relative Zeitinformation nicht um eine Uhrzeit an sich. Die Zustandsänderung der automatisierten Anlage betrifft jedes der elektrischen Bauteile, so dass diese eine einheitliche Bezugsgröße erhalten. Hierbei ist es zudem nicht erforderlich, über das Signalnetzwerk eine zusätzliche Information, wie beispielsweise ein Zeittelegramm zu versenden, das zu einer Beeinträchtigung der Bandbreite des Signalnetzwerkes führt. Auch müssen etwaig vorhandene Laufzeitunterschiede nicht berücksichtigt werden.

Die Zustandsänderung ist ein Wechsel der automatisierten Anlage in einen Betriebszustand. Mit anderen Worten werden die Bauteile anhand des Wechsels in den Betriebszustand synchronisiert. Folglich ist der zeitliche Abstand zwischen dem Interagieren der elektrischen Bauteile und deren Synchronisation anhand der gemeinsamen Bezugsgröße vergleichsweise gering, so dass auch bei einer etwaig vorhandenen Abweichung oder Ungenauigkeiten der Zeitzähler untereinander die Synchronisation zumindest für eine bestimmte Zeit nach Beginn des Betriebes der automatisierten Anlage gegeben ist.

Der Wechsel in den Betriebsmodus erfolgt aus einem Standby-Modus, in dem bereits eine Bestromung von Komponenten der automatisierten Anlage vorliegt. Insbesondere liegt an dem elektrischen Bauteilen im Standby-Modus bereits eine elektrische Spannung an. Auf diese Weise müssen beispielsweise etwaig vorhandene Kondensatoren oder dergleichen nicht geladen werden, was einerseits zu einer im Wesentlichen unverzüglichen Einsatzbereitschaft der automatisierten Anlage führt. Andererseits ist in diesem Fall eine im Wesentlichen unverzügliche Registrierung der relativen, globalen Zeitinformation ermöglicht. Infolge dessen ist eine Abweichung des Empfangs und/oder der Verarbeitung der relativen, globalen Zeitinformation bei den einzelnen elektrischen Bauteilen im Wesentlichen nicht gegeben sondern vielmehr zeitgleich. Sofern als Signalnetzwerk ein EtherCAT-Standard verwendet wird, wird als Wechsel insbesondere der von "preoperational" nach "operational", bei der Verwendung von Feldbussen zumindest jedoch der nach "operational", herangezogen.

Insbesondere wird die Zustandsänderung selbst über das Signalnetzwerk übertragen. Mit anderen Worten wird über das Signalnetzwerk eine Botschaft übertragen, die von den einzelnen elektrischen Bauteilen empfangen wird. Bei Empfang dieser Botschaft ändert zumindest ein Teil der elektrischen Bauteile der automatisierten Anlage den Betriebsmodus, so dass die automatisierte Anlage in einen neuen Zustand überführt ist. Ferner ziehen sämtliche elektrische Bauteile den Zeitpunkt des Empfangs der Botschaft, die eine Änderung des Zustands der automatisierten Anlage auslöst, als Bezugsgröße zur Synchronisation heran. Aufgrund der Übertragung der Zustandsänderung über das Signalnetzwerk ist keine weitere Registrierung des Zustandes der automatisierten Anlage durch die elektrischen Bauteile selbst notwendig. Auch ist aufgrund der Heranziehung der die Zustandsänderung übertragenden und veranlassenden Botschaft ein Zeitversatz zwischen der tatsächlichen Zustandsänderung und dem Zeitpunkt, der als Bezugsgröße herangezogen wird nicht vorhanden, wie dies bei der Verwendung von zwei oder mehr Botschaften und einer hierdurch bedingten Latenzzeit der Fall ist.

Zweckmäßigerweise sind ab dem Empfang der globalen, relativen Zeitinformation durch die elektrischen Bauteile deren jeweilige Zeitzähler aktiviert. Zumindest jedoch beginnt in jedem elektrischen Bauteil ab der Registrierung der globalen, relativen Zeitinformation die Zeitzählung mittels der Zeitzähler. Insbesondere erfolgt hierbei zusätzlich eine Zeitzählung mittels der Zeitzähler vor Empfang der globalen, relativen Zeitinformation. Mit anderen Worten sind die Zeitzähler im Wesentlichen ununterbrochen aktiviert, auch bei einem etwaigen Wechsel in den Standby-Modus. Auf diese Weise ist es ermöglicht, auch für Zeitpunkte, die vor Empfang der globalen, relativen Zeitinformation liegen, nach Empfang der globalen, relativen Zeitinformation anhand dieser den lokalen Zeitstempel zu berechnen und somit beispielsweise Auswertung über eine Abstimmung der Bauteile vor der Synchronisation vorzunehmen. Zudem ist ein Abstimmungsaufwand verringert.

Zweckmäßigerweise sind bei Empfang und/oder der Registrierung der globalen, relativen Zeitinformation durch die elektrischen Bauteile die jeweiligen Zeitzähler auf Null (0) gesetzt. Beispielsweise befinden sich die Zeitzähler im Zustand Null (0) vor dem Zeitpunkt der Bezugsgröße. Besonders bevorzugt jedoch werden die Zeitzähler auf Null (0) gesetzt, sobald die globale, relative Zeitinformation durch die einzelnen elektrischen Bauteile empfangen wird.

Beispielswiese weisen die elektrischen Bauteile unterschiedliche Zykluszeiten auf, die insbesondere voneinander unabhängig sind. Vorteilhafterweise sind die Zykluszeiten zumindest bekannt, um jeweils den lokalen Zeitstempel zu berechnen. Geeigneterweise weisen sämtliche Zeitzähler die gleiche Zykluszeit auf. Insbesondere sind die Zykluszähler zueinander baugleich, was einen Austausch und eine Wartung erleichtert. Sofern bei Empfang der globalen, relativen Zeitinformation die Zeitzähler auf Null (0) gesetzt werden, weisen folglich alle Zeitzähler nach jeder beliebigen Zeitspanne den gleichen Wert auf, was einerseits eine Abstimmung der elektrischen Bauteile untereinander und andererseits eine etwaige Fehlersuche erleichtert. Insbesondere wird als Zykluszeit aller Zeitzähler die kürzeste Zeitspanne aller elektrischen Bauteile herangezogen, die für einen ordnungsgemäßen Betrieb der automatisierten Anlage realisiert sein muss. Mit anderen Worten ist die Zykluszeit die schnellste, kürzeste Zeitspanne aller elektrischen Bauteile, die für einen ordnungsgemäßen Betrieb der automatisierten Anlage realisiert sein muss.

Zweckmäßigerweise ist die Zykluszeit des Signalnetzwerkes ein ganzzahliges Vielfaches der Zykluszeit der Zeitzähler, wobei während eines Zykluses des Signalnetzwerkes jedes elektrische Bauteil genau einmal Prozessdaten über das Signalnetzwerk austauscht. Insbesondere fällt der Beginn eines der Zyklen des Signalnetzwerkes mit dem Beginn eines der Zyklen eines der elektrischen Bauteile zusammen, vorzugsweise aller elektrischen Bauteile. Auf diese Weise ist ein vergleichsweise kompliziertes Zuordnen der Zyklen der einzelnen Bauteile sowohl untereinander als auch im Bezug auf das Signalnetzwerk vermieden, was zu einer Reduzierung von Berechnungsaufwand führt.

Zweckmäßigerweise weisen die elektrischen Bauteile jeweils einen Zwischenspeicher auf, in den die jeweiligen Prozessdaten zumindest bis zum Versand über das Signalnetzwerk gespeichert werden. Auf diese Weise ist es ermöglicht, die Prozessdaten in der vollen Auflösung des jeweiligen elektrischen Bauteils zu speichern und gleichzeitig die Prozessdaten in einer geringeren zeitlichen Auflösung wiederzugeben. Auf diese Weise wird die Bandbreite des Signalnetzwerks nicht überbeansprucht. Insbesondere wird die zeitliche Auflösung der über das Signalnetzwerk versandten Prozessdaten von dem Empfänger der Prozessdaten dem jeweiligen elektrischen Bauteil mitgeteilt. Folglich ist es ermöglicht, die Prozessdatenaufnahme durch das jeweilige elektrische Bauteil mit dessen jeweiliger maximaler Zeitauflösung zu erfassen, was eine komplizierte Neuprogrammierung der Prozessdatenaufnahme vermeidet. Dabei wird die für den Empfänger notwendige Zeitauflösung über das Signalnetzwerk versandt, was nur einen Bruchteil der für die volle Zeitauflösung benötigten Bandbreite benötigt, wobei dennoch die übermittelte Zeitauflösung zum ordnungsgemäßen Betrieb der automatisierten Anlage ausreicht.

Insbesondere werden die Prozessdaten in dem jeweiligen Zwischenspeicher im Wesentlichen kontinuierlich während eines vorbestimmten Zeitraums aufgezeichnet, zweckmäßigerweise während des Betriebszustands, und die Prozessdaten über das Signalnetzwerk übertragen. Auch nach Anhalten oder Beendigung der Prozessdatenaufzeichnung mittels des jeweiligen Zwischenspeichers stehen die vergleichsweise zeitlich hochauflösenden Prozessdaten weiterhin zur Verfügung und sind somit über das Signalnetzwerk auslesbar. Die Zwischenspeicher sind geeigneterweise als Ringspeicher ausgeführt.

Nach einem Wechsel in den Standby-Modus werden vorzugsweise die in dem Zwischenspeicher gespeicherten Prozessdaten über das Signalnetzwerk übertragen, so dass auch die zeitlich vergleichsweise hochauflösenden Prozessdaten zur Verfügung stehen. Während des Standby-Modus ist der Bedarf an Bandbreite des Signalnetzwerks vergleichsweise niedrig, so dass hierbei keine Beeinträchtigung der automatisierten Anlage stattfindet.

Das Verfahren zur Synchronisation einer automatisierten Anlage sieht vor, dass eine globale, relative Zeitinformation als Bezugsgröße zur Zeitzählung in zumindest zwei einen Zeitzähler aufweisenden Bauteilen der automatisierten Anlage als Bezugsgröße herangezogen wird. Diese wird vorzugsweise über ein Signalnetzwerk übertragen, mittels dessen die Bauteile miteinander verbunden sind, und das zum zyklisch Prozessdatenversand vorgesehen ist.

Als globale, relative Zeitinformation wird eine Zustandsänderung herangezogen, die jedes der elektrischen Bauteile betrifft, wobei die Zustandsänderung ein Wechsel in einen Betriebszustand aus einem Standby-Modus ist.

Nachfolgend wird ein Ausführungsbeispiel der Erfindung anhand einer Zeichnung näher erläutert. Darin zeigen:
- Fig. 1: schematisch eine automatisierte Anlage mit elektrischen Bauteilen, und
- Fig. 2: eine synchronisierte Kommunikation der Bauteile.

Einander entsprechende Teile sind in allen Figuren mit den gleichen Bezugszeichen versehen.

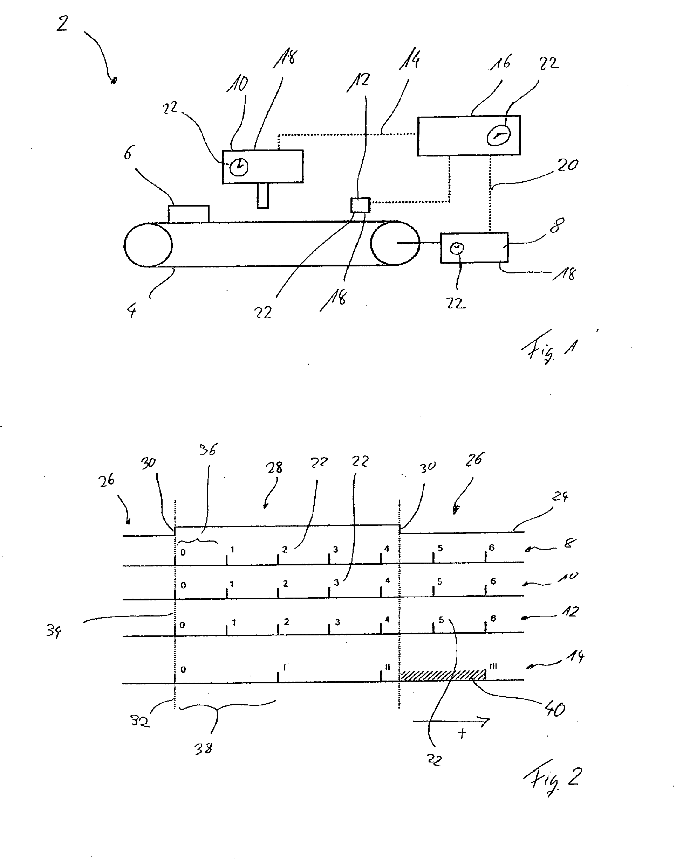

In Fig. 1 ist schematisch vereinfacht eine automatisierte Anlage 2 mit einem Bandförderer 4 dargestellt, auf dem ein Fertigungsprodukt 6 aufliegt. Der Bandförderer 4 wird mittels eines Elektromotors 8 betrieben, und somit die Position des Fertigungsproduktes 6 verändert. Ferner weist die automatisierte Anlage 2 sowohl einen Greif- und Bearbeitungskopf 10 als auch eine Lichtschranke 12 auf, die ebenso wie der Elektromotor 8 über ein Signalnetzwerk 14 mit einer Prozesssteuerung 16 verbunden sind. Als Signalnetzwerk 14 wird ein EtherCAT-Feldbussystem herangezogen. Der Greif- und Bearbeitungskopf 10 und der Elektromotor 8 stellen jeweils einen Aktor und die Lichtschranke 12 einen Sensor der automatisierten Anlage 2 dar. Diese elektrischen Bauteile 8, 10, 12 umfassen jeweils einen Zwischenspeicher 18, in dem jeweils Prozessdaten 20 gespeichert werden, die über das Signalnetzwerk 14 periodisch übertragen werden. Hierfür weist jedes elektrische Bauteil 8, 10, 12 jeweils einen Zeitzähler 22 auf, mittels dessen jedem der elektrischen Bauteile 8, 10, 12 ein Zeitfenster zur Übertragung der jeweiligen Prozessdaten zugewiesen wird.

Hierfür ist eine Synchronisation der elektrischen Bauteile 8, 10, 12 und der Prozesssteuerung 16 erforderlich, die in Fig. 2 dargestellt ist. In der obersten Zeile ist der zeitliche Verlauf des Zustandes 24 der vollständigen automatisierten Anlage 2 gezeigt. Diese wird aus einem Standby-Modus 26, währenddessen die Prozesssteuerung 26 bestromt ist, jedoch die elektrischen Bauteile 8, 10, 12 keine Aktion ausführen oder Daten aufnehmen, in einen Betriebszustand 28 durch eine Zustandsänderung 30 versetzt.

Während des Betriebszustandes 28 wird der Elektromotor 8 bestromt und somit der Bandförderer 4 in Bewegung versetzt, was eine Positionsänderung des Fertigungsprodukts 6 bedingt. Auch wird das Fertigungsprodukt 6, sobald sich dieses an einer geeigneten Position befindet mittels des Greif- und Bearbeitungskopfes 10 bearbeitet. Nach erfolgter Bearbeitung wird der Zustand 24 der automatisierten Anlage 2 durch eine weitere Zustandsänderung 30 erneut in den Standby-Modus 26 überführt. Der Wechsel des Zustands 24 wird mittels eines geeigneten SET-Befehls veranlasst, der über das Signalnetzwerk 14 übertragen wird.

Wenn das erste SET-Signal, das den Wechsel der automatisierten Anlage 2 aus dem Standby-Modus 26 in den Betriebszustand 28 veranlasst, das Signalnetzwerk 14 durcheilt, wird dieser Zeitpunkt als globale, relative Zeitinformation 32 zur Synchronisation der elektrischen Bauteile 8, 10, 12 herangezogen. Wie unterhalb des Zustands 24 der automatisierten Anlage 2 gezeigt ist, werden bei Empfang des SET-Signals die Zeitzähler 22 der elektrischen Bauteile 8, 10, 12 auf Null (0) gesetzt und die Zustandsänderung 30 folglich als eine Bezugsgröße 34 herangezogen, ab der mit den Zeitzählern 22 die verstrichene Zeit gezählt wird.

Alle Zeitzähler 22 der elektrischen Bauteile 8, 10, 12 weisen eine bekannte, gleiche Zykluszeit 36 auf. Mit anderen Worten ist der Zählerstand der Zeitzähler 22 nach einer beliebigen Zeit im Wesentlichen gleich. Der Zählerstand der Zeitzähler gibt hierbei an, wie viele Zyklen seit der Bezugsgröße 34 vergangen sind, und der lokale Zeitstempel ist der Zählerstand multipliziert mit der Zykluszeit 36.

Die Zykluszeit 36 der elektrischen Bauteile ist gleich der Hälfte einer Zykluszeit 38 des Signalnetzwerks 14, während dieser jedes der elektrischen Bauteile 8, 10, 12 die in dem jeweiligen Zwischenspeicher 18 aufgenommenen Prozessdaten über das Signalnetzwerk 14 an die Prozesssteuerung 16 versendet. Hierbei ist die Reihenfolge des Versendens stets gleich. Um Brandbreite einzusparen, werden dabei nicht sämtliche Prozessdaten, die während einer Zykluszeit 38 des Signalnetzwerks 14 von dem jeweiligen elektrischen Bauteil 8, 10, 12 aufgenommen worden sind, über das Signalnetzwerk 14 versandt. Vielmehr werden lediglich diejenigen Daten der Prozesssteuerung 16 bereitgestellt, die für eine ordnungsgemäße Funktionsweise erforderlich sind.

Eine Übertragung der zeitlich vergleichsweise hochaufgelösten Prozessdaten, die in dem jeweiligen, als Ringspeicher ausgebildeten Zwischenspeicher 18 der elektrischen Bauteile 8, 10, 12 hinterlegt sind, über das Signalnetzwerk 14 erfolgt je nach aktuellen Anforderungen, Bedarf, beispielsweise wenn das Fertigungsprodukt 6 sich an einer bestimmten Stelle des Bandförderers 4 befindet, oder zur Überprüfung der Funktionstüchtigkeit der einzelnen elektrischen Bauteil 8, 10, 12. Der Zeitpunkt der Übertragung ist hierbei vergleichsweise beliebig und kann sowohl während des Betriebszustands 28 als auch des Standby-Modus 26 erfolgen.

Nach dem erneuten Wechsel in den Standby-Modus 26 wird für die bereits angebrochene Zykluszeit 28 eine Kommunikation zwischen der Prozesssteuerung 16 und den elektrischen Bauteilen 8, 10, 12 über das Signalnetzwerk 14 in einem Zeitfenster 40 aufrechterhalten. Während des Zeitfensters 40 nehmen die elektrischen Bauteile 8, 10, 12 keine weiteren Daten auf. Es werden vielmehr die bereits in dem jeweiligen Zwischenspeicher 18 hinterlegten Prozessdaten in voller zeitlicher Auflösung, also mit der Zykluszeit 36 der Zeitzähler 22 versehene Prozessdaten, an die Prozesssteuerung 16 gesandt, um etwaige Verschleißerscheinungen oder anderweitige Beeinträchtigungen der elektrischen Bauteile 8, 10, 12 zu bestimmen.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### Bezugszeichenliste

- 2: automatisierte Anlage
- 4: Bandförderer
- 6: Fertigungsprodukt
- 8: Elektromotor
- 10: Greif- und Bearbeitungskopf
- 12: Lichtschranke
- 14: Signalnetzwerk
- 16: Prozesssteuerung
- 18: Zwischenspeicher
- 20: Prozessdaten
- 22: Zeitzähler
- 24: Zustand
- 26: Standby-Modus
- 28: Betriebszustand
- 30: Zustandsänderung
- 32: globalen, relativen Zeitinformation
- 34: Bezugsgröße
- 36: Zykluszeit Zeitzähler
- 38: Zykluszeit Signalnetzwerk
- 40: Zeitfenster

## Patentansprüche

1. Automatisierte Anlage (2) mit mindestens zwei zusammenwirkenden elektrischen, jeweils einen Zeitzähler (22) aufweisenden Bauteilen (8, 10, 12), die signaltechnisch miteinander zur zyklischen Prozessdatenübertragung über ein Signalnetzwerk (14) gekoppelt sind, und die anhand einer globalen, relativen Zeitinformation (32) als Bezugsgröße (34) miteinander synchronisiert sind, wobei die globale, relative Zeitinformation (32) eine Zustandsänderung (30) ist, die Zustandsänderung (30) jedes der elektrischen Bauteile (8, 10, 12) betrifft,
**dadurch gekennzeichnet,**
**dass** die Zustandsänderung (30) ein Wechsel aus einem Standby-Modus (26) in einen Betriebszustand (28) ist.

2. Automatisierte Anlage (2) nach Anspruch 1,
**dadurch gekennzeichnet,**
**dass** die Zustandsänderung (30) über das Signalnetzwerk (14) übertragen Ist.

3. Automatisierte Anlage (2) nach Anspruch 1 oder 2,
**dadurch gekennzeichnet,**
**dass** ab dem Empfang der globalen, relativen Zeitinformation (32) die Zeitzähler (22) aktiviert sind.

4. Automatisierte Anlage (2) nach einem der Ansprüche 1 bis 3,
**dadurch gekennzeichnet,**
**dass** bei Empfang der globalen, relativen Zeitinformation (32) die Zeitzähler (22) auf Null gesetzt sind.

5. Automatisierte Anlage (2) nach einem der Ansprüche 1 bis 4,
**dadurch gekennzeichnet,**
**dass** alle Zeitzähler (22) die gleiche Zykluszeit (36) aufweisen, wobei die Zykluszeit (38) des Signalnetzwerks (14) insbesondere ein ganzzahliges Vielfaches hiervon ist.

6. Automatisierte Anlage (2) nach einem der Ansprüche 1 bis 5,
**dadurch gekennzeichnet,**
**dass** die Bauteile (8, 10, 12) jeweils einen Zwischenspeicher (18) zur Speicherung der Prozessdaten (20) aufweisen.

7. Automatisierte Anlage (2) nach Anspruch 6,
**dadurch gekennzeichnet,**
**dass** die Übertragung der in dem Zwischenspeicher (18) gespeicherten Prozessdaten (20) über das Signalnetzwerk (14) nach einem Wechsel In einen Standby-Modus (26) und/oder bei einem Bedarf erfolgt.

8. Verfahren zur Synchronisation einer automatisierten Anlage (2) mit mindestens zwei jeweils einen Zeitzähler (22) aufweisenden Bauteilen (8, 10, 12), die signaltechnisch miteinander zur zyklischen Prozessdatenübertragung über ein Signalnetzwerk (14) gekoppelt sind, bei dem eine globale, relative Zeitinformation (32) als Bezugsgröße (34) herangezogen wird, bei dem eine Zustandsänderung (30) als globale, relative Zeitinformation (32) herangezogen wird, die Zustandsänderung (30) jedes der elektrischen Bauteile betrifft,
**dadurch gekennzeichnet,**
**dass** als Zustandsänderung (30) ein Wechsel in einen Betriebszustand (28) aus einem Standby-Modus (26) herangezogen wird.

## Claims

1. Automated system (2) having at least two interacting electric components (8, 10, 12) which each have a time counter (22) and which are coupled to one another by means of signals for the cyclical process data transfer via a signal network (14), and which are synchronised with one another by means of global, relative time information (32) as a reference value (34), wherein the global, relative time information (32) is a change of state (30), the change of state (30) relates to each of the electrical components (8, 10, 12), **characterised in that** the change of state (30) is a change from a standby mode (26) to an operational state (28).

2. Automated system (2) according to claim 1, **characterised in that** the change of state (30) is transferred via the signal network (14).

3. Automated system (2) according to claim 1 or 2, **characterised in that** the time counters (22) are activated from the receipt of the global, relative time information (32).

4. Automated system (2) according to one of claims 1 to 3, **characterised in that** the time counters (22) are set to zero on receipt of the global, relative time information (32).

5. Automated system (2) according to one of claims 1 to 4, **characterised in that** all time counters (22) have the same cycle time (36), wherein the cycle time (38) of the signal network (14) is, in particular, an integral multiple of this.

6. Automated system (2) according to one of claims 1 to 5, **characterised in that** the components (8, 10, 12) each have a buffer memory (18) to store the process data (20).

7. Automated system (2) according to claim 6, **characterised in that** the transfer of the process data (20) stored in the buffer memory (18) occurs via the signal network (14) after a change to a standby mode (26) and/or when needed.

8. Method to synchronise an automated system (2) having at least two components (8, 10, 12) which each have a time counter (22) and which are coupled to one another by means of signals for the cyclic process data transfer via a signal network (14), in which global, relative time information (32) is used as a reference value (34), in which a change of state (30) is used as global, relative time information (32), the change of state (30) relates to each of the electrical components, **characterised in that** a change to an operational state (28) from a standby mode (26) is used as a change of state (30).

## Revendications

1. Installation automatisée (2) comprenant au moins deux composants électriques (8, 10, 12) dotés chacun respectivement d'un compteur horaire (22) et interagissant réciproquement, qui sont couplés mutuellement sur le plan de la technique de transmission des signaux pour une transmission cyclique de données de processus par l'intermédiaire d'un réseau de transmission de signaux (14), et qui sont synchronisés les uns avec les autres au regard d'une information de temps relative, globale (32), en tant que grandeur de référence (34), l'information de temps relative, globale (32), étant une variation d'état (30), et la variation d'état (30) concernant chacun des composants électriques (8, 10, 12),
**caractérisée**
**en ce que** la variation d'état (30) est un changement ou passage d'un mode veille ou standby (26) à un état de fonctionnement (28).

2. Installation automatisée (2) selon la revendication 1,
**caractérisée**
**en ce que** la variation d'état (30) est transmise par l'intermédiaire du réseau de transmission de signaux (14).

3. Installation automatisée (2) selon la revendication 1 ou la revendication 2,
**caractérisée**
**en ce que** les compteurs horaires (22) sont activés à partir de la réception de l'information de temps relative, globale (32).

4. Installation automatisée (2) selon l'une des revendications 1 à 3,
**caractérisée**
**en ce que** les compteurs horaires (22) sont mis à zéro au moment de la réception de l'information de temps relative, globale (32).

5. Installation automatisée (2) selon l'une des revendications 1 à 4,
**caractérisée**
**en ce que** tous les compteurs horaires (22) présentent le même temps de cycle (36), le temps de cycle (38) du réseau de transmission de signaux (14) étant notamment un multiple entier de celui-ci.

6. Installation automatisée (2) selon l'une des revendications 1 à 5,
**caractérisée**
**en ce que** les composants (8, 10, 12) présentent respectivement une mémoire intermédiaire (18) pour la mémorisation des données de processus (20).

7. Installation automatisée (2) selon la revendication 6,
**caractérisée**
**en ce que** la transmission des données de processus (20) mémorisées dans la mémoire intermédiaire (18) s'effectue par l'intermédiaire du réseau de transmission de signaux (14), après un passage ou changement vers un mode veille (26) et/ou en cas de besoin.

8. Procédé de synchronisation d'une installation automatisée (2) comprenant au moins deux composants électriques (8, 10, 12) dotés chacun respectivement d'un compteur horaire (22) et interagissant réciproquement, qui sont couplés mutuellement sur le plan de la technique de transmission des signaux pour une transmission cyclique de données de processus par l'intermédiaire d'un réseau de transmission de signaux (14), procédé d'après lequel on utilise une information de temps relative, globale (32), en tant que grandeur de référence (34), d'après lequel on utilise une variation d'état (30) en tant qu'information de temps relative, globale (32), et d'après lequel la variation d'état (30) concerne chacun des composants électriques,
**caractérisé**
**en ce qu'**en guise de variation d'état (30), on utilise un passage ou changement vers un état de fonctionnement (28) à partir d'un mode veille ou standby (26).
